# EUROPEAN PATENT SPECIFICATION

(11) **EP 1 851 525 B1**
(45) Date of publication and mention of the grant of the patent: **26.11.2014**
(21) Application number: 06704912.2
(22) Date of filing: 24.02.2006
(51) Int. Cl.: G01N 1/31, G01N 1/36

(54) **METHOD AND APPARATUS FOR TISSUE PROCESSING**
VERFAHREN UND VORRICHTUNG ZUR GEWEBEBEARBEITUNG
PROCEDE ET APPAREIL POUR LE TRAITEMENT DE TISSUS

(30) Priority: 25.02.2005 AU 2005901060
(43) Date of publication of application: 07.11.2007
(73) Proprietor: Leica Biosystems Melbourne Pty Ltd, Mt Waverley, VIC 3149 (AU)
(72) Inventor: DRUMMOND, Michael, Houston, Glen Waverley, Victoria 3150 (AU)
(74) Representative: Chapman, Paul Gilmour
(86) International application number: PCT/AU2006/000237
(87) International publication number: WO 2006/089365

(56) References cited:
- EP-A1- 0 499 317
- WO-A1-95/24628
- WO-A1-95/24628
- WO-A1-2005/001437
- WO-A2-03/029845
- US-A- 3 996 326
- US-A- 3 996 326

## Description

### Field of Invention

The present invention relates to tissue processing, namely, processing of tissue samples in preparation for diagnostic and/or prognostic evaluations where the tissue samples may be any type of human, animal or vegetable tissue. In particular, the present invention relates to a method and apparatus for automated histological processing of tissue samples. An example of an automated tissue processor is disclosed in International PCT Application No PCT/AU02/01337 (published as WO 2003/029845) in the name of the present applicant and it will be convenient to hereinafter describe the invention in relation to the use of that tissue processor. It should be appreciated, however, that the present invention is not limited to that application, only.

### Related Art

Throughout this specification the use of the word "inventor" in singular form may be taken as reference to one (singular) or all (plural) inventors of the present invention. The inventor has identified the following related art.

Procedures for preparing tissue samples for microscopic examination involve embedding the tissue sample in paraffin and slicing the paraffin-embedded tissue sample very thinly with a microtome. Prior to embedding the tissue sample, the tissue sample is processed with various fluid materials appropriate to prepare for the evaluation or examination to take place on the tissue sample. In a typical processing operation, prior to paraffin embedding, the tissue sample may be fixed, dehydrated, cleared, and then infiltrated with molten paraffin and, thereafter depending on the examination to be conducted, stained. The fluid materials used in these processing steps may comprise alcohols, clearants such as xylene, fixatives such as formalin. Moreover, histological tissue specimen preparation is a physical process that involves chemical solutions reacting with biological specimens. The end result of such treatment is a sample that has had water removed, and been infiltrated with material such as paraffin wax. Once the tissue has been embedded with paraffin wax it is stable and may then be sectioned on a rotary microtome. As noted above, tissue processing typically involves four different sub-procedures involving a number of reagents and infiltrating material(s), which may be referred to collectively and/or in combination as fluids. Specifically, the four typical sub-procedures are as follows:

### (a) Fixation

Fixation is a process by means of which cell proteins are stabilised, and the process is normally performed using chemical solutions. A good fixative is usually a fluid, which will neither shrink nor swell the tissue, and more particularly will not dissolve its constituent parts, but will kill bacteria and moulds, and render enzymes inactive. In addition, the solution must modify tissue constituents in such a way that they retain their form when subjected to treatment that would have damaged them in their initial state. A commonly used chemical solution for fixation is Formalin.

### (b) Dehydration

Since the ultimate purpose of tissue specimen treatment is to embed the tissue sample within an infiltrating material, eg paraffin wax, and since the water, of water based fixatives, and paraffin wax are not miscible, the sample must be dehydrated after the fixation step. This is usually achieved by subjecting the tissue sample to increasing concentrations of dehydrants such as alcohols.

### (c) Clearing

After dehydration, the tissue sample may still not be capable of accepting paraffin wax since paraffin wax and alcohol are not miscible. A chemical solution, selected to be miscible with both alcohol and paraffin, may be used to clear the alcohol from the sample. The chemical solution most commonly used is Xylene, although chloroform may also be used. Unfortunately, these solutions may be considered toxic. Xylene, for example, is considered to be toxic although most histological processing laboratories use Xylene on a daily basis.

### (d) Infiltration

The fourth and final step in the tissue sample treatment is infiltrating the sample, usually with paraffin wax. In this step the cleared tissue samples are placed into paraffin wax heated to a point above its liquefaction temperature. Several changes of paraffin wax may be required to remove the residual Xylene so that the tissue is completely infiltrated with the molten paraffin wax. This alone necessitates a good and ready supply of molten infiltrating material.

The timing of the fluid change for all the fluids relates to the requirement to effectively displace the previous chemical from the tissue samples. Tissue samples can vary considerably in content and size, and therefore there may be a large variation in the time required to displace the fluid from one sample compared to the time taken to displace fluid from another. Further, some samples are sandwiched between biopsy pads that are porous and absorb significant quantities of fluid.

An attempt at automation of the previously manual method of tissue processing involved placing solutions in a circular arrangement so that samples could be moved from container to container until they reached the last heated paraffin wax reservoir. An example of an instrument with this type of configuration used in the histology field was the Technicon^{™} instrument. One of the major disadvantages of instruments of this type was that they allowed fumes to escape into the laboratory, thus exposing the laboratory workers to a hazardous environment. To overcome this problem, the next generation of tissue processing instruments included a centrally located closed chamber or retort for the tissue samples. The solutions necessary for tissue processing were delivered into the closed chamber where the fluids are pumped in and out of the chamber in sequence. Normally the chamber would not be opened during the process.

Tissue processing may be broken into sequential steps as mentioned above. The particular fluids used, temperatures and times of exposure may be defined in a protocol.

As the chamber is closed, and only a single protocol can be run, the protocol must attempt to cater for the range of tissue samples that may be included in a single run. This can result in either over processing or under processing of some samples. Given the sealed nature of the retort, tissue samples may not easily be removed or added during a processing run.

Another problem is that some samples require urgent processing, while other samples are not urgent. In many types of tissue sample preparation apparatus it has not been possible to stop a current sample run to process a sample required urgently, or to employ a protocol that allows an urgently required sample to be processed with other samples that require longer processing times. Thus, either the urgently required sample is run in isolation, or it is put with other samples, increasing the processing time.

Examples of related art automated tissue processing machines will be found in the patent literature, and typical examples include US Patent 4141312 Louder, and US Patent 5049510 Repasi et al.

Some systems include heating of wax or tissue samples with microwaves, however microwave systems are difficult to automate, and may preferentially heat the tissue sample rather than the reagents or when heating paraffin wax, for instance, do so in an uncontrolled manner. Typically, these systems may process up to only about 80 tissue cassettes in a run. Lower throughputs are due, in part, to the limitations introduced by the need to supply power to the microwave source.

A histology laboratory processes a large number of tissue samples for examination and it is important that the tissue samples be prepared as efficiently as possible. A large variety of apparatus has been developed over time to improve the efficiency of the preparation process in which a tissue sample is both prepared for embedding through exposure to various solutions and is then embedded with infiltrating material such as paraffin.

US 3,996,326 describes a method of embedding a histology specimen which involves a specimen embedding supply container and molding device which does not require an auxiliary melting and pouring apparatus. The device comprises upper and lower mold portions and is pre-filled with paraffin wax which has solidified. US 3,996,326 describes that in a method of embedding a tissue sample, the wax contained within the mold is melted, the tissue sample is placed within the molten wax and the paraffin is then allowed to cool and harden. The lower mold portion is then removed and the embedded tissue sample can be microtomed.

While apparatus and methods for preparing and embedding tissue samples for histological examination have progressed over the years to provide more efficiency in the preparation of tissue specimen, the large number of tissue samples which are prepared daily by histological laboratories, require the most efficient techniques available to increase the number of samples that may be processed and to reduce the cost of such processing. Accordingly, there is an ever-increasing workload on laboratories conducting tissue processing and the inventor has recognised an insufficient capacity or number of automated tissue processors to cope with demand. Many companies, including the present applicant, have tried to overcome this by developing both higher capacity instruments and faster instruments to improve overall throughput, as exemplified in WO 2003/029845. Even so, tissue processors may only accommodate a fixed number of cassettes in any given run, typically 300 cassettes. Most laboratories are maintaining and running daily multiple tissue processors in order to accommodate the large number of cassettes that they need to process daily. A typical laboratory may process 300 - 400 cassettes per day.

In recent developments being the subject of co-pending patent applications by the present applicant, xylene-free processing is possible. An example of a tissue processor capable of xylene-free tissue processing is disclosed in WO 2003/029845. An example of the tissue processor disclosed therein is the Peloris™ Tissue Processor manufactured and sold by the present applicant, Vision BioSystems Limited, and as noted above has addressed a number of the above problems. In ordinary operation of related art tissue processors, initially the infiltrating material added to the retort is not boiling at ambient pressure and is at a relatively low temperature of about 60 - 65°C. Vacuum may then be applied to the infiltrating material, which thereafter may be heated to a moderately higher temperature. With respect to the Peloris^{™} Tissue Processor, it is possible to firstly heat the infiltrating material to a relatively high temperature of about 85°C and then have vacuum applied. Overall, what is required for the Peloris^{™} Tissue Processor and other tissue processors is a ready supply of molten infiltrating material for efficient tissue processing to take place.

In typical operating conditions, when using any automated tissue processor it is necessary to fill the wax baths with wax on approximately a weekly frequency. Wax pellets are typically added to an infiltrating bath, which heats the pellets until they melt and achieve a suitable temperature. The wax is held at the elevated temperature, typically 65 degrees Celsius, until required. The inventor has now recognised and appreciates that when wax in pellet form is poured into any container, such as a wax bath, pellets may spill creating a mess and, moreover there is a considerable volume of air that may be captured between the pellets, therefore when the wax melts the total gross volume of wax drops as the air is displaced by molten wax. The net result is that a user typically has to "top-up" the wax bath multiple times as the wax melts to ensure the correct volume is in the wax bath. This may be annoying to a user as it often takes place over a long period. Typical melting times for related art instruments as identified above are, for example, up to 10 or 15 hours to melt all the wax. If a user forgets to top up a wax bath and starts a protocol without sufficient wax in the bath then the automated processor will typically give an error due to insufficient wax to cover the tissue and therefore complete a run. It is also problematic if a user wants to commence an overnight run, with the last step being wax infiltration. The user may know the wax will be molten in time but may not be able to start the run unless someone is present overnight to top up the wax bath before the wax step is performed.

Slow melting rates as indicated above have driven many users to consider alternatively using pre-molten wax to add directly to the baths. As such, the use of molten wax may now be considered common in some labs where an instrument is filled from pre melted wax. This involves carrying & pouring large volumes of hot liquid wax in the lab with the associated safety hazards.

### Summary of Invention

It is an object of the present invention to provide a method, which alleviates at least one disadvantage of the related art arrangements.

According to an aspect of the invention, there is provided a method of melting infiltrating material according to claim 1.

There is described a method of melting material for use in tissue processing including placing the material, in the form of solid blocks, into a bath and applying heat to melt the material, wherein the material has a volume, which is substantially similar in both melted and solid forms, that substantially equates to a predetermined fill volume of the bath sufficient to effect required tissue processing.

There is described a block of material for use in a tissue processor in accordance with the above-described method. In the method of the invention, the infiltrating material is mounted on a heater element of a tissue processor, the element being in the form of a spike adapted to be positioned in a bath of the processor, the spike being arranged to carry material mounted thereon and to apply heat to the material in order to facilitate melting of the material.

There is described a method of processing tissue samples comprising:
providing infiltrating material to an automated tissue processor wherein a form factor of the infiltrating material provides sufficient infiltrating material to enable a tissue processing protocol to run unsupervised.

There is described a method of tissue processing comprising the steps of:
heating a volume of infiltrating material to a temperature above the melting point of the infiltrating material within a tissue processor chamber;
maintaining a displacement of the infiltrating material such that the infiltrating material is in close proximity to at least one heater element operatively associated with the tissue processor chamber.

The present invention provides a heater element arrangement of a tissue processor for heating infiltrating material comprising:
an elongated heating element adapted to extend into a tissue processor chamber wherein the elongated heating element is adapted to protrude into a unitary volume of infiltrating material so as to engage the infiltrating material for heating.
There is described an apparatus adapted to perform tissue processing;
said apparatus comprising:
   processor means adapted to operate in accordance with a predetermined instruction set,
   said apparatus, in conjunction with said instruction set, being adapted to perform the method steps as disclosed herein.

There is described a computer program product comprising:
a computer useable medium having computer readable program code and computer readable system code embodied on said medium for processing tissue samples within a data processing system, said computer program product comprising:
   computer readable code within said computer useable medium for performing the method steps as disclosed herein.

Other aspects and preferred forms of the invention are disclosed in the specification and / or defined in the appended claims, forming a part of the description of the invention.

In essence the present invention stems from the realisation that the physical form factor of the infiltrating material has a direct bearing on the efficiency of the sub-procedure of infiltration within automated tissue processing. Providing enough material in one or a small number of unitary forms to be sufficient for a given protocol accordingly provides a reduction in surface area that would ordinarily capture unwanted air, which frustrates the melting process and also allows a formation of material that will remain submerged during the heating process so as to remain positioned within the body of molten material and proximate a heating source associated with a tissue processing chamber. This in turn may accelerate the melting of infiltrating material and improve throughput for a tissue processing instrument.

In operation a supply of wax in a solid block is a preferred form factor. This may be placed into the wax bath and the lid closed. The volume would be sufficient for given protocol. As a result there is no need to top up, no need to measure volumes, no need to monitor when it is molten. In other embodiments, the supplied infiltrating material may be a single large block or several small blocks to allow for topping up as wax is used in the processor. The inventor has recognised that solid wax blocks melt much faster than pellets, for example, for numerous reasons. In one respect there is improved thermal conductivity due to no entrapped air. The blocks may sink in a wax bath and hence remain against the heaters melting quickly. They are less likely to stick to unheated dividers in a wax bath allowing them to sit on heaters and melt quickly. Melting time may be approximately half that of pellets. Quick melting time allows users to be confident that wax is molten in time for a protocol run. On Peloris™, for example, melt time will be less than 4hrs ensuring that wax may be changed and melted before the operator puts on the protocol and goes home.

There are several advantages provided by the present invention:
- No need for a user to measure wax volume
- No need for a user to top up the wax bath
- Lower volume when transporting wax (lower transport costs)
- Easier to store
- Safer. Wax pellets when dropped on a floor are a safety hazard (so is molten wax, bums from transporting molten wax)
- Faster melting. A solid block of wax will sink to the bottom of the wax bath and thus be in contact with the metal surface. Heat will transfer from the metal to the solid wax reasonably quickly. When wax pellets are melting they form an "iceberg" effect which is a floating lump of pellets with air entrapped. Because it floats it is not in contact with the walls. The

only heat transfer is through the already molten wax which is actually a very good insulator and slows down heat transfer and thus produces longer melting times.

### Brief Description of the Drawings

Further disclosure, objects, advantages and aspects of the present invention may be better understood by those skilled in the relevant art by reference to the following description of preferred embodiments taken in conjunction with the accompanying drawings, which are given by way of illustration only, and thus are not limiting to the scope of the present invention, and in which:
Figure 1 is a perspective view showing four unitary volumes of infiltrating material having a form factor for use in performing the method of an embodiment of the present invention;
Figure 2 is a perspective view of a tissue processor chamber according to the prior art receiving a supply of infiltrating material;
Figure 3 is a perspective view of a tissue processor chamber receiving a supply of infiltrating material and further showing a heater element arrangement suitable for use in performing the method of the present invention; and
Figure 4 is a perspective view of a tissue processor suitable for use in performing the method of the present invention.
Figure 5 is a perspective view of a unitary volume of tissue infiltrating material for use in performing the method of the present invention with dimensions suitable for a Peloris^{™} Tissue Processor.

### Detailed Description

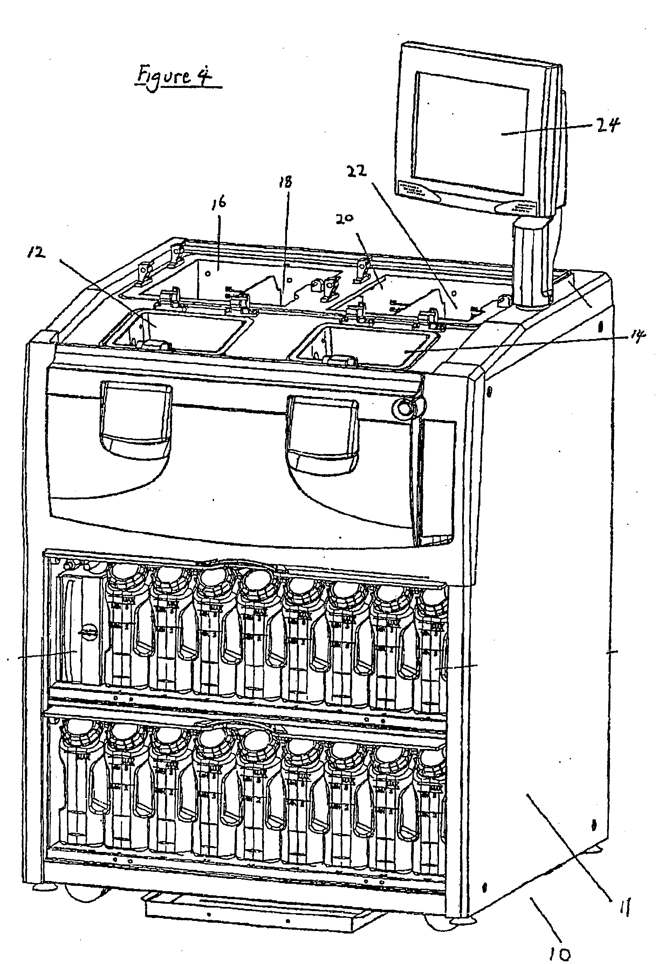

With reference to figures 4, a Peloris^{™} Tissue Processor 10 is shown and comprises a control interface 24 that employs a graphical user interface to enable a user to operate the tissue processor 10 by a controller, not shown. The controller 25 may be located in cabinet 11, however the interface 24 and controller 25 may be located separately, for example as part of a stand-alone personal computer. The controller 25 may include a personal computer processor such as a Celeron chip by Intel Corporation located on an ETX form factor PCB (not shown). The controller 25 may contain or store a number of predefined protocols (or steps) for processing tissue, the protocols being stored in a non-volatile memory such as a hard drive. Protocols may be programmable by the user to implement a number of steps for tissue processing, or they may be predefined. Typical protocol parameters include which reagents are to be applied to the samples, how long the reagents are to be applied, the temperature at which the reagents are applied, whether agitation is to take place, and whether ambient pressure in the retort is to be changed. As would be appreciated by the person skilled in the art, other parameters may be included.

In figure 4, the retorts 12 and 14 can be seen in front of infiltrating baths 16, 18, 20 and 22. The lids for the retorts 12 and 14 have been removed for clarity, as have the lids for the infiltrating baths. Each retort 12 and 14 would have a lid (not shown), and each pair of infiltrating baths would also have a lid. The lids may seal with the retorts and baths when in a closed position.

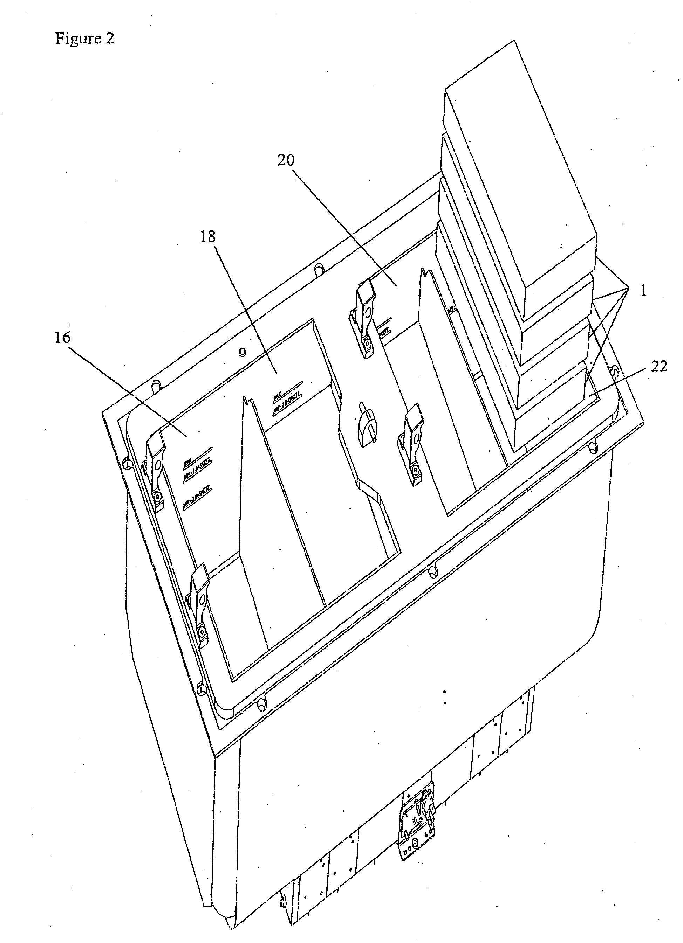

In performing the sub-procedure of infiltration, the wax is held in the infiltrating baths 16-22, which are heated to a desired temperature above the wax's melting temperature, which is typically 54 degrees Celsius. Figure 2 shows the infiltrating baths 16-22 in perspective view. Infiltrating material 1 is also shown in figure 2 being supplied to the baths 16-22.

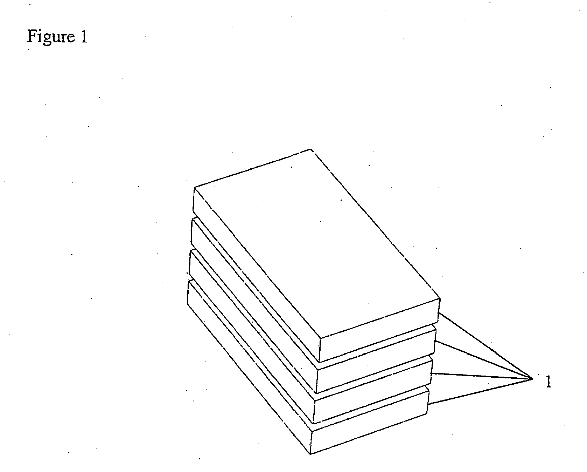

Infiltrating material in the form of a unitary volume or volumes of wax are provided to one or more infiltrating bath 16 - 22, which heats the wax until it melts and achieve a suitable temperature. The wax is held at the elevated temperature, typically 65 degrees Celsius, until required. The unitary volumes may correspond to solid wax blocks 1 as shown in figure 1. The form factor of the volumes 1 corresponds to one or more predetermined volumes that are suitable for providing the wax to a given tissue processor chamber that may be either a wax bath or a retort. The predetermined volumes may, for example, comprise two or more desired fill levels. Preferably, the wax is supplied to a wax bath and the predetermined volumes should cater for this. The total volume of a number of wax blocks or alternatively a single wax block may be a predetermined volume. The infiltrating material preferably comprises paraffin wax. Other waxes or embedding material may also be used. Examples of other embedding material includes ester, polyester, microcrystalline cellulose and bees wax. Resins and gels used for embedding material may also be used with the present invention. As used herein, the term volume includes a specific amount of a liquid, dimensions or other parameters of the form factor.

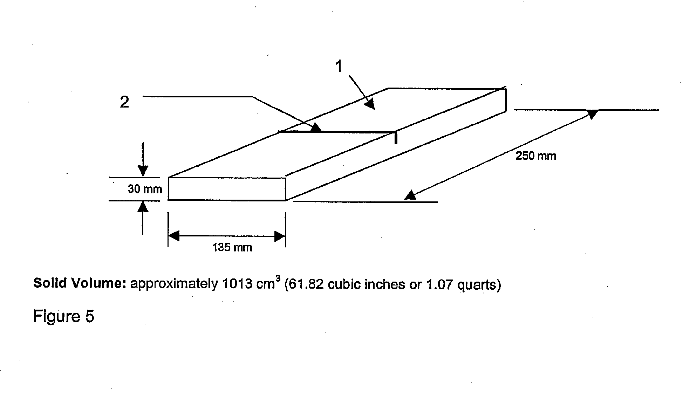

Figure 5 shows an example of the present invention wherein a single wax block further comprises at least one line of weakness such as a cut, perforations or score line 2 defining a portion of the wax block such that the size of the wax block can be reduced as needed. A reduced wax block provides, for example, sufficient material to fill a smaller wax bath.

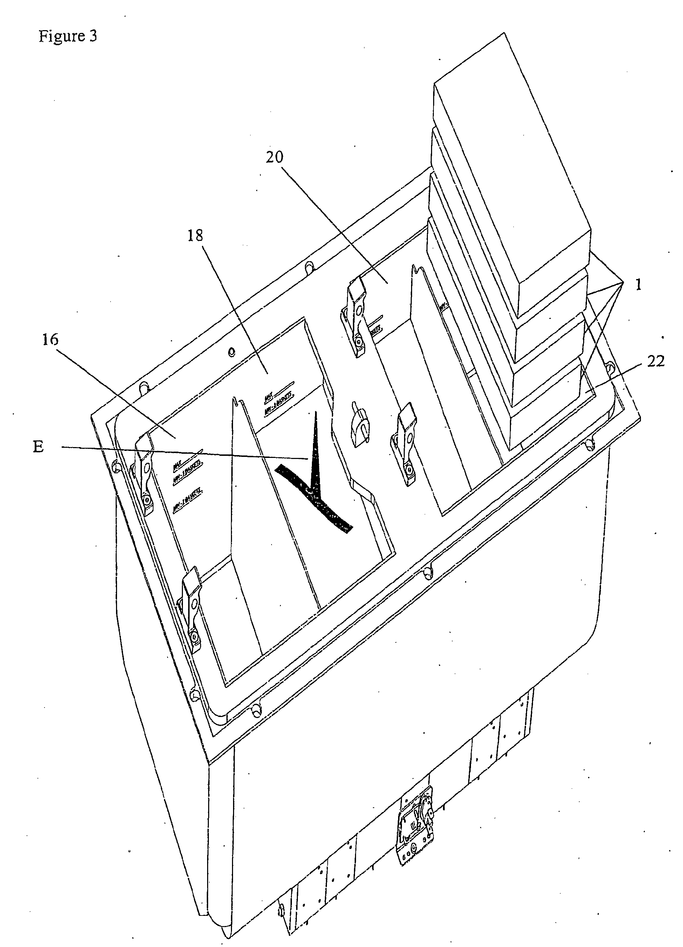

As shown in figure 3, a heater arrangement comprises an elongated element E that extends into the wax bath so as to engage a wax block 1. The so "skewered" wax block 1 is then in constant contact with the heater element whilst melting takes place.

The present embodiment shows four infiltrating baths; however there may be more or less depending on retort and infiltrating bath volume. Infiltrating lines, not shown, run from the infiltrating baths 16-22 to both retorts 12 and 14, and may comprise valves that allow one, some, or all baths to be fluidly connected to one of the retorts. The arrangement of the baths, valves, and infiltrating material lines enables samples in one retort to be washed with up to four different infiltrating materials. Further, the infiltrating material may be heated in one or more baths while the processor 10 is in operation and drawing infiltrating material from the remainder of the baths.

During the infiltrating stage, the wax is drawn into the retort 12 by opening the valve between the retort and appropriate infiltrating bath, then reducing the pressure in the retort using a pump, not shown, and opening valves. The reduced pressure in the retort draws the wax into the retort 12. Typically the pressure may be -20 to -80 kpa gauge, however a wide variety of pressures may be used, and these are user programmable via the controller. To facilitate this application of pressures the form factor of the present invention allows for a predetermined volume or amount of wax to be supplied to a wax bath and have the lid closed without the need to further disturb the wax bath by opening the lid to supply further wax as in the related art. The wax may be heated to a temperature above or approximately the same as the boiling temperature of the dehydrating fluid used in the last or last few sub-procedures. If an isopropanol is used, the boiling temperature will be approximately 82 degrees Celsius at atmospheric pressure. Ethanol typically boils at 78 degrees Celsius. After the retort has been drained of dehydrating fluid, some fluid remains on or absorbed by the tissue samples. The tissue samples may then be subjected to a drying stage as described above to remove further dehydrating fluid, and the retort flushed with clean air. Wax is then drawn into the retort. Upon contact with the heated wax, the remaining dehydrating fluid is evaporated or boiled off the tissue samples, and the wax replaces the dehydrating fluid, thus infiltrating the samples. The pump may continue to draw off air or vapour from the retort to reduce the pressure in the retort, which will reduce the evaporation temperature of the dehydration fluid. As an example, the pressure in the retort may be reduced by 50kpa gauge, resulting in a boiling temperature of approximately 52 degrees Celsius for the isopropanol. Reducing temperatures of the wax contacting the tissue samples may provide an advantage, for example where certain types of tissues do not perform well when exposed to high temperatures. Typically the paraffin wax used (Paraplast® from McCormick Scientific) melts at about 54 degrees Celsius. Infiltrating materials such as resins and other fluids used in histological tissue processing are also contemplated in the above examples, and the present invention is not intended to be limited to the application of infiltrating materials mentioned herein. It is also contemplated that infiltrating material may be a mixture of substances, such as mineral oils and paraffin wax.

An aspect of the present invention that is surprising is that faster melting times can be achieved by adapting the wax into a block which conforms somewhat to the wax bath. It is normal, when solving the problem of increasing the rate of melting of a substance, to attempt to increase the surface area of the solid, as heat transfer is related to the surface area of the material, rather than volume. Thus, it is expected that, for equal amounts of ice, many small pieces will melt much faster than a single solid block. However, in the present case, a surprising result occurs in that wax pellets, which are normally used, melt more slowly than a solid block. Optimal results are obtained when the wax block is in contact with the wax bath near a heater element. While the molten wax will be just over melting point during the early stages of heating, the wax bath wall may be substantially hotter, thus increasing the rate of heat transfer by increasing the temperature difference between the wax block and the immediate surrounds of the wax block, in this case a wall of the wax bath near a heater element.

In another form of the present invention, one or more wax blocks may be adapted to substantially conform to a wall or floor of the wax bath adjacent a heater element. For example, if the main heater element for the wax bath is in the floor of the wax bath, then the wax block may be adapted to conform the to the shape of the floor of the wax bath. Further, in another form, a weight such as metal plate may be placed on top of the one or more wax blocks, to force them into contact with the heater element, minimising the space between the wax block and the heater element. In operation, one or more wax blocks 1, such as those shown in figure 2, may be placed into wax bath 22. A plate (not shown), may be placed on top of the wax blocks 1 to ensure good contact with the floor of the wax bath, which in the Peloris instrument, contains the main heater element. The plate may be adapted to fit into the wax bath so that the lid (not shown) may be closed. Examples of such plates include a 10mm thick brass plate having dimensions that closely conform to the walls of the wax bath, so that plate can be placed into the wax bath, and as the wax block or blocks melt, the plate sinks into the wax bath. In the present example, the brass plate would be 200mm by 100mm by 10mm, made from brass, and preferably be Teflon coated to prevent embedding media from sticking to the surface. Such a plate would weight approximately 1.8kg. The plate should have good thermal conductivity properties as after the was blocks have liquefied, it will rest on the floor of the wax bath, above the heater. There is no requirement to remove the plate until after the instrument has finished processing. In the present example, two plates may be joined by a connection. The connection passes over the wall between wax baths 16 and 18 shown in figure 2, and provides an indication that the bath has a plate inside, as well as assisting in making the plates easier to remove. After all the wax has melted, the plate would be sitting on the floor of the wax bath. To ensure that the drain of the wax bath is not blocked, the plate may incorporate apertures to assist the flow of molten wax through and around the plate within the wax bath. The combination of wax block and plate has been shown to further reduce melting times from using the wax blocks alone.

A numbers of tests were conducted to determine the melt time of pellets compared to a wax block according to the invention using a Peloris^{™} Tissue Processor manufactured and sold by, the present applicant, Vision BioSystems Limited. Wax baths were filled with 4kgs of wax pellets and the heater system switched on with a setting of 65 degrees celcius. Maximum wax temperature measured was 65 degrees celcius. Typically, melt times for wax pellets using the Peloris instrument was 8-10 hours. Melt temperatures with other instruments were typically longer, with melt times of 15hrs+ observed with a Leica TP1050 instrument.

In comparison, a 4kg wax block, or 4x 1 kg of wax blocks, was inserted into the wax baths and the heater system switched on with a setting of 65 degrees celcius. Maximum wax temperature measured was 65 degrees celcius. Typically, melt times for a wax block using the Peloris instrument was 4-5 hours. Typical melt times for 4 x 1kg blocks was 4hrs. Melting 4kg of solid wax produces approximately 5 litres of molten wax.

"Comprises/comprising" when used in this specification is taken to specify the presence of stated features, integers, steps or components but does not preclude the presence or addition of one or more other features, integers, steps, components or groups thereof.

## Claims

1. A method of melting infiltrating material including placing the infiltrating material (1), in the form of solid blocks, into an infiltrating bath (16, 18, 20, 22) and applying heat to melt the infiltrating material (1), wherein the infiltrating material (1) has a volume, which is similar in both melted and solid forms, that equates to a predetermined fill volume of the infiltrating bath (16, 18, 20, 22) sufficient to effect required tissue processing of more than one tissue sample, **characterized in that** the infiltrating material (1) is mounted on a spike (E), extending into the infiltrating bath, to which heat is applied to facilitate melting of the material.

2. A method as claimed in claim 1, wherein the infiltrating material (1) is provided in the form of one or more unitary blocks.

3. A method as claimed in claim 1 or 2, including placing at least one of the blocks in abutting relationship with a surface of the infiltrating bath (16, 18, 20, 22), the at least one block being configured to conform to the surface.

4. A method as claimed in claim 3, wherein the infiltrating material (1) is melted by further applying heat to the surface.

5. A method as claimed in any one of the previous claims, including placing a weighted plate on the infiltrating material (1) to force the infiltrating material (1) downwardly into the infiltrating bath (16, 18, 20, 22).

6. A method as claimed in claim 5, wherein infiltrating material (1) is melted in adjacent infiltrating baths (16, 18, 20, 22) and associated plates are placed on the infiltrating material (1) in each infiltrating bath (16, 18, 20, 22), the plates being joined by a connection which provides an indication of the presence of the plates within the infiltrating baths (16, 18, 20, 22) when submerged.

7. A method as claimed in any one of the previous claims, wherein heat of between 50°C to 80°C is applied in order to melt the infiltrating material (1) which is in the form of a wax.

8. A method as claimed in claim 1, wherein heat In the order of 65°C is applied to 4kg of infiltrating material (1), for less than 4-5 hours wherein approximately 5 litres of molten infiltrating material is produced.

## Patentansprüche

1. Verfahren zum Schmelzen von Infiltrationsmaterial einschließlich der Schritte des Anordnens des Infiltrationsmaterials (1) in der Form von festen Blöcken in einem Infiltrationsbad (16, 18, 20, 22) und des Anwendens von Wärme, um das Infiltrationsmaterial (1) zu schmelzen, wobei das Infiltrationsmaterial (1) ein Volumen aufweist, das in sowohl der geschmolzenen als auch der festen Form gleich ist, das einem vorgegebenen Füllvolumen des Infiltrationsbades (16, 18, 20, 22) gleicht, ausreichend, um die erforderliche Gewebebearbeitung von mehr als einer Gewebeprobe zu bewirken, **dadurch gekennzeichnet, dass** das Infiltrationsmaterial (1) auf einem Stift (E) montiert wird, der sich in das Infiltrationsbad hinein erstreckt, bei dem Wärme zur Anwendung gebracht wird, um das Schmelzen des Materials zu begünstigen.

2. Verfahren nach Anspruch 1, bei dem das Infiltrationsmaterial (1) in der Form eines oder mehrerer unitärer Blöcke bereitgestellt wird.

3. Verfahren nach Anspruch 1 oder 2, das den Schritt des Anordnens von mindestens einem der Blöcke in einer anstoßenden Beziehung mit einer Oberfläche des Infiltrationsbades (16, 18, 20, 22) umfasst, wobei der mindestens eine Block ausgebildet ist, um sich an die Oberfläche anzupassen.

4. Verfahren nach Anspruch 3, bei dem das Infiltrationsmaterial (1) durch weiteres Anwenden von Wärme auf die Fläche geschmolzen wird.

5. Verfahren nach einem der vorhergehenden Ansprüche, das den Schritt des Anordnens einer gewichtsbelasteten Platte auf dem Infiltrationsmaterial (1) umfasst, um das Infiltrationsmaterial (1) nach unten in das Infiltrationsbad (16, 18, 20, 22) zu drücken.

6. Verfahren nach Anspruch 5, bei dem das Infiltrationsmaterial (1) in benachbarten Infiltrationsbädern (16, 18, 20, 22) geschmolzen wird und die dazugehörenden Platten auf dem Infiltrationsmaterial (1) in jedem Infiltrationsbad (16, 18, 20, 22) angeordnet werden, wobei die Platten mittels einer Verbindung verbunden werden, die eine Anzeige für das Vorhandensein der Platten innerhalb der Infiltrationsbäder (16, 18, 20, 22) liefert, wenn sie getaucht sind.

7. Verfahren nach einem der vorhergehenden Ansprüche, bei dem Wärme von zwischen 50 °C bis 80 °C zur Anwendung gebracht wird, um das Infiltrationsmaterial (1) zu schmelzen, das in der Form eines Wachses vorliegt.

8. Verfahren nach Anspruch 1, bei dem Wärme in der Größenordnung von 65 °C auf 4 kg des Infiltrationsmaterials (1) über weniger als 4 bis 5 Stunden zur Anwendung gebracht wird, wobei annähernd 5 Liter des geschmolzenen Infiltrationsmaterials erzeugt werden.

## Revendications

1. Procédé de fusion de matériau d'infiltration, englobant les étapes de placement du matériau d'infiltration (1), sous forme de blocs solides, dans un bain d'infiltration (16, 18, 20, 22), et d'application de chaleur pour faire fondre le matériau d'infiltration (1), dans lequel le matériau d'infiltration (1) a un volume similaire dans les formes fondue et solide, équivalent à un volume de remplissage prédéterminé du bain d'infiltration (16, 18, 20, 22), suffisant pour assurer le traitement de tissus requis de plus d'un échantillon de tissus, **caractérisé en ce que** le matériau d'infiltration (1) est monté sur une pointe (E), s'étendant dans le bain d'infiltration, à laquelle la chaleur est appliquée pour faciliter la fusion du matériau.

2. Procédé selon la revendication 1, dans lequel le matériau d'infiltration (1) est fourni sous forme d'un ou de plusieurs blocs unitaires.

3. Procédé selon les revendications 1 ou 2, englobant l'étape de placement d'au moins un des blocs dans une relation à butée contre une surface du bain d'infiltration (16, 18, 20, 22), le au moins un bloc étant configuré de sorte à se conformer à la surface.

4. Procédé selon la revendication 3, dans lequel le matériau d'infiltration (1) est fondu par application additionnelle de chaleur à la surface.

5. Procédé selon l'une quelconque des revendications précédentes, englobant l'étape de placement d'une plaque lestée sur le matériau d'infiltration (1) pour entraîner le matériau d'infiltration (1) vers le bas dans le bain d'infiltration (16, 18, 20, 22).

6. Procédé selon la revendication 5, dans lequel le matériau d'infiltration (1) est fondu dans des bains d'infiltration adjacents (16, 18, 20, 22), des plaques associées étant placées sur le matériau d'infiltration (1) dans chaque bain d'infiltration (16, 18, 20, 22), les plaques étant reliées par une liaison fournissant une indication sur la présence des plaques dans les bains d'infiltration (16, 18, 20, 22) lors de leur immersion.

7. Procédé selon l'une quelconque des revendications précédentes, dans lequel une chaleur comprise entre 50°C et 80°C est appliquée, en vue de faire fondre le matériau d'infiltration (1) se présentant sous forme d'une cire.

8. Procédé selon la revendication 1, dans lequel une chaleur de l'ordre de 65°C est appliquée à 4 kg de matériau d'infiltration (1), pendant moins de 4 à 5 heures, et dans lequel environ 5 litres de matériau d'infiltration fondu sont produits.
